# EUROPEAN PATENT SPECIFICATION

(11) **EP 3 617 264 B1**
(45) Date of publication and mention of the grant of the patent: **01.12.2021**
(21) Application number: 18791364.5
(22) Date of filing: 15.03.2018
(51) Int. Cl.: C08L 21/00, B60C 1/00, C08K 3/06, C08K 5/40, C08L 7/00, C08L 9/00

(54) **RUN-FLAT TIRE RUBBER COMPOSITION AND RUN-FLAT TIRE**
KAUTSCHUKZUSAMMENSETZUNG FÜR NOTLAUFREIFEN UND NOTLAUFREIFEN
COMPOSITION DE GOMME POUR PNEU AUTOPORTEUR, ET PNEU AUTOPORTEUR

(30) Priority: 25.04.2017 JP 2017086348
(43) Date of publication of application: 04.03.2020
(73) Proprietor: Bridgestone Corporation, Tokyo 104-8340 (JP)
(72) Inventor: OISHI, Shigeki, Tokyo 104-8340 (JP)
(74) Representative: Oxley, Robin John George
(86) International application number: PCT/JP2018/010303
(87) International publication number: WO 2018/198578

(56) References cited:
- EP-A1- 2 119 742
- WO-A1-2016/167282
- WO-A1-2018/033508
- JP-A- 2009 102 469
- JP-A- 2009 234 363
- JP-A- 2009 234 374
- JP-A- 2009 270 003
- JP-A- 2010 070 641

## Description

### TECHNICAL FIELD

The present invention relates to a rubber composition for run flat tires and a run flat tire.

### BACKGROUND ART

Conventionally, there is proposed a pneumatic tire runnable even in a state where an internal pressure of the tire (hereinafter referred to as "inner pressure") has been decreased due to a puncture or the like (such a pneumatic tire will be hereinafter referred to as "run flat tire"). In the run flat tire, rigidity of a sidewall section is increased such that the tire is runnable even in a state where the internal pressure of the tire has been decreased. The sidewall section is provided with a side reinforcing layer formed of a rubber composition alone or a complex formed of a rubber composition and fibers, etc. (see, for example, PTL 1).

### CITATION LIST

### PATENT LITERATURE

PTL 1: JP-A 11-310019

### SUMMARY OF INVENTION

### TECHNICAL PROBLEM

As properties required for the sidewall reinforcing layer of the run flat tire, improvement of run flat durability, maintenance of ride comfort during ordinary running, and so on are exemplified.

For example, as a measure for improving the run flat durability, there is known a method in which by increasing a modulus of elasticity or reducing a loss tangent of the side reinforcing rubber layer, heat generation of the side reinforcing rubber layer itself is suppressed. However, there was yet remained room for improvement.

A problem of the present invention is to provide a rubber composition for run flat tires, from which a run flat tire with improved run flat durability without impairing the ride comfort is obtained, as well as a run flat tire with improved run flat durability without impairing the ride comfort.

### SOLUTION TO PROBLEM

<1> A rubber composition for run flat tires, containing: a rubber component; a low-molecular weight conjugated diene-based polymer having a weight average molecular weight of 10,000 to 40,000 as expressed in terms of polystyrene, which is measured by gel permeation chromatography, in an amount of 1 to 10 parts by mass based on 100 parts by mass of the rubber component; and a vulcanization accelerator, with a mass ratio of the content of the vulcanization accelerator to the content of the low-molecular weight conjugated diene-based polymer (vulcanization accelerator/low-molecular weight conjugated diene-based polymer) being 1 to 3.5.
<2> The rubber composition for run flat tires as set forth in <1>, wherein the aromatic vinyl bonding amount of the low-molecular weight conjugated diene-based polymer is less than 5%.
<3> The rubber composition for run flat tires as set forth in <1> or <2>, further containing sulfur in an amount of 1.0 to 10 parts by mass based on 100 parts by mass of the rubber component.
<4> The rubber composition for run flat tires as set forth in any one of <1> to <3>, wherein the rubber component contains a natural rubber.
<5> The rubber composition for run flat tires as set forth in any one of <1> to <4>, wherein the vulcanization accelerator contains a thiuram compound.
<6> A run flat tire including: a sidewall section having a side reinforcing rubber layer formed from the rubber composition for run flat tires as set forth in any one of <1> to <5>, a tread, a carcass, a bead core, and a bead filler.

### ADVANTAGEOUS EFFECTS OF INVENTION

In accordance with the present invention, a rubber composition for run flat tires, from which a run flat tire with improved run flat durability without impairing ride comfort is obtained, as well as a run flat tire with improved run flat durability without impairing the ride comfort can be obtained.

### BRIEF DESCRIPTION OF DRAWING

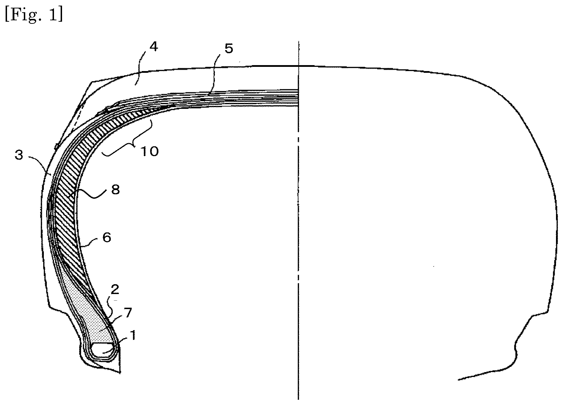

Fig. 1 is a schematic view illustrating a cross section of an embodiment of a run flat tire of the present invention.

### DESCRIPTION OF EMBODIMENTS

### <Rubber Composition for Run Flat Tires>

The rubber composition for run flat tires of the present invention contains a rubber component; a low-molecular weight conjugated diene-based polymer having a weight average molecular weight of 10,000 to 40,000 as expressed in terms of polystyrene, which is measured by gel permeation chromatography, in an amount of 1 to 10 parts by mass based on 100 parts by mass of the rubber component; and a vulcanization accelerator, with a ratio of the content of the vulcanization accelerator to the content of the low-molecular weight conjugated diene-based polymer (vulcanization accelerator/low-molecular weight conjugated diene-based polymer) being 1 to 3.5.

In the present invention, the low-molecular weight conjugated diene-based polymer having a weight average molecular weight of 10,000 to 40,000 as expressed in terms of polystyrene, which is measured by gel permeation chromatography, is not included in the rubber component.

In the run flat tire, in the case where the inner pressure of the tire is decreased due to a puncture or the like, the body of a car is supported by the sidewall section of the tire. In the case where running is undergone in a state where the inner pressure of the tire is decreased, it may be considered that the side reinforcing rubber layer of the sidewall section is fractured due to a cycle in which deflection is generated in the sidewall reinforcing rubber layer, and when running is continued in a state where the deflection is generated, the side reinforcing layer generates heat and is softened, and the deflection is further increased.

In consequence, a measure for suppressing the deflection of the side reinforcing rubber layer is investigated.

Conventionally, as for the low-molecular weight conjugated diene-based polymer having a weight average molecular weight of 10,000 to 40,000 as expressed in terms of polystyrene, which is measured by gel permeation chromatography (hereinafter occasionally referred to simply as "low-molecular weight conjugated diene-based polymer"), in order to enhance workability of the rubber composition and to impart heat resistance to the rubber composition, its content in the rubber composition was high (for example, 10 parts by mass based on 100 parts by mass of the rubber component). Conventionally, it was considered that the low-molecular weight conjugated diene-based polymer is entangled with a sulfur atom (crosslinking sulfur) at a crosslinking point of the molecule of the rubber component, whereby a modulus of elasticity of a vulcanized rubber obtained from the rubber composition is improved.

But, it has been noted that in a system where the amount of the low-molecular weight conjugated diene-based polymer is high, the vulcanized rubber is rather softened, and the deflection of the side reinforcing rubber layer is increased. It may be considered that this is caused due to the fact that vulcanization accelerator which accelerates vulcanization of the rubber component reacts with the low-molecular weight conjugated diene-based polymer, whereby the vulcanization of the rubber component to be originally performed is impaired. Namely, it has been found that it is needed to take into consideration a relation between the amount of the crosslinking point due to vulcanization and the amount of the low-molecular weight conjugated diene-based polymer.

In this regard, the rubber composition for run flat tires of the present invention contains the low-molecular weight conjugated diene-based polymer, the content of which is controlled such that a content ratio of the vulcanization accelerator to the low-molecular weight conjugated diene-based polymer (vulcanization accelerator/low-molecular weight conjugated diene-based polymer) is in a range of 1 to 3.5, and it may be considered that the vulcanization of the rubber component is hardly impaired. Furthermore, it may be considered that the low-molecular weight conjugated diene-based polymers entangled with crosslinking sulfur on the molecule of the rubber component are bonded to each other in the side reinforcing rubber layer through heating to be caused due to deflection, to generate gelation, and therefore, separately from the vulcanization of the rubber component, crosslinking is generated, thereby enabling a network structure of the rubber component to be strengthened.

As a result, it may be considered that the durability of the side reinforcing rubber layer can be more enhanced due to elasticity by the presence of the low-molecular weight conjugated diene-based polymer without impairing the ride comfort. In consequence, even when the low-molecular weight conjugated diene-based polymer is used in a rather larger amount as 10 parts by mass based on 100 parts by mass of the rubber component, by allowing the content ratio of the vulcanization accelerator to the low-molecular weight conjugated diene-based polymer (vulcanization accelerator/low-molecular weight conjugated diene-based polymer) to fall within the aforementioned range, the previously mentioned problem can be solved.

In the light of the above, it may be considered that a run flat tire with improved run flat durability without impairing the ride comfort is obtained from the rubber composition for run flat tires of the present invention.

The rubber composition for run flat tires and the run flat tire of the present invention are hereunder described in detail.

### [Rubber Component]

The rubber composition for run flat tires of the present invention contains a rubber component.

As the rubber component, there is exemplified at least one diene-based rubber selected from the group consisting of a natural rubber (NR) and a synthetic diene-based rubber. The rubber component may be modified.

Specifically, examples of the synthetic diene-based rubber include a polyisoprene rubber (IR), a polybutadiene rubber (BR), a styrene-butadiene copolymer rubber (SBR), a butadiene-isoprene copolymer rubber (BIR), a styrene-isoprene copolymer rubber (SIR), a styrene-butadiene-isoprene copolymer rubber (SBIR), and modified rubbers thereof.

As the diene-based rubber, a natural rubber, a polyisoprene rubber, a styrene-butadiene copolymer rubber, a polybutadiene rubber, an isobutylene-isoprene rubber, and modified rubbers thereof are preferred, and a natural rubber and a polybutadiene rubber are more preferred. The diene-based rubbers may be used alone or may be used as a blend of two or more thereof.

The rubber component may contain either one of a natural rubber and a synthetic diene-based rubber or may contain both of them. However, from the viewpoint of improving fracture properties, such as tensile strength and fracture elongation, it is preferred that the rubber component contains at least a natural rubber, and it is more preferred that the rubber component contains a combination of a natural rubber and a synthetic diene-based rubber.

From the viewpoint of more improving the ride comfort, the proportion of the natural rubber in the rubber component is preferably 40 to 95% by mass, and more preferably 45 to 90% by mass.

The rubber component may contain a non-diene-based rubber or a modified rubber thereof to an extent that the effect of the present invention is not impaired.

In the rubber component, the aromatic vinyl bonding amount is preferably 10% by mass or less, more preferably 5% by mass or less, and still more preferably 0% by mass. The aromatic vinyl bonding amount of the rubber component can be determined by an infrared method (Morello method).

### [Low-Molecular Weight Conjugated Diene-based Polymer]

The rubber composition for run flat tires of the preset invention contains a low-molecular weight conjugated diene-based polymer having a weight average molecular weight of 10,000 to 40,000 as expressed in terms of polystyrene, which is measured by gel permeation chromatography, and the content of the low-molecular weight conjugated diene-based polymer in the rubber composition for run flat tires (in the case of containing plural low-molecular weight conjugated diene-based polymers, the total content of all of the low-molecular weight conjugated diene-based polymers) is 1 to 10 parts by mass based on 100 parts by mass of the rubber component.

When the content of the low-molecular weight conjugated diene-based polymer is more than 10 parts by mass based on 100 parts by mass of the rubber component, as mentioned previously, the vulcanized rubber obtained from the rubber composition for run flat tires is softened, and the deflection of the side reinforcing rubber layer is increased during run flat running. When the content of the low-molecular weight conjugated diene-based polymer is less than 1 parts by mass based on 100 parts by mass of the rubber component, bonding of the low-molecular weight conjugated diene-based polymers to each other, which is generated due to heat generation during run flat running, becomes insufficient, and the durability of the run flat tire is not obtained.

The content of the low-molecular weight conjugated diene-based polymer is preferably 1 to 8 parts by mass, more preferably 1 to 6 parts by mass, and still more preferably 1.5 to 4 parts by mass based on 100 parts by mass of the rubber component.

In the low-molecular weight conjugated diene-based polymer, its weight average molecular weight (Mw) as expressed in terms of polystyrene, which is measured by gel permeation chromatography, is 10,000 to 40,000.

When the weight average molecular weight (Mw) as expressed in terms of polystyrene is less than 10,000, the run flat durability is impaired. When the weight average molecular weight (Mw) as expressed in terms of polystyrene is more than 40,000, the run flat durability is impaired, and furthermore, the ride comfort is impaired.

From the viewpoint of more improving the run flat durability, the weight average molecular weight (Mw), as expressed in terms of polystyrene, of the low-molecular weight conjugated diene-based polymer is preferably 20,000 or more, more preferably 25,000 or more, and still more preferably 30,000 or more.

From the viewpoint of more improving the ride comfort, the weight average molecular weight (Mw) as expressed in terms of polystyrene is preferably 35,000 or less, more preferably 25,000 or less, and still more preferably 20,000 or less.

From the viewpoint of efficiently improving the durability at the small part number, the molecular weight distribution (Mw/Mn) is preferably 1.00 to 2.00, more preferably 1.00 to 1.40, and still more preferably 1.10 to 1.25.

In the low-molecular weight conjugated diene-based polymer, the aromatic vinyl bonding amount (proportion of an aromatic vinyl compound unit occupying in the whole of monomer units constituting the low-molecular weight conjugated diene-based polymer) is preferably less than 5% by mass. There is a case where the low-molecular weight conjugated diene-based polymer contains, for example, a styrene-butadiene copolymer. In this case, when the styrene bonding amount (proportion of a styrene unit occupying in the whole of the low-molecular weight conjugated diene-based polymer) is less than 5% by mass, a decrease of elasticity of the side reinforcing rubber layer obtained from the rubber composition for run flat tires is suppressed, whereby the ride comfort can be improved. In addition, by suppressing the styrene content low, the rubber composition can be maintained to have a low heat generation property, and therefore, the run flat durability can be improved. The aromatic vinyl bonding amount is more preferably less than 3% by mass, and still more preferably less than 1% by mass.

In the low-molecular weight conjugated diene-based polymer, the vinyl bonding amount in the diene moiety is preferably 5 to 100% by mass. By making the vinyl bonding amount high, the heat resistance of the side reinforcing rubber layer is improved, whereby the run flat durability can be improved. From such a viewpoint, in the low-molecular weight conjugated diene-based polymer, the vinyl bonding amount in the diene moiety is more preferably 20% by mass or more, and still more preferably 40% by mass or more.

A microstructure of the low-molecular weight conjugated diene-based polymer (aromatic vinyl bonding amount and vinyl bonding amount) can be determined by an infrared method (Morello method).

The low-molecular weight conjugated diene-based polymer is preferably a homopolymer of a conjugated diene compound or a copolymer of an aromatic vinyl compound and a conjugated diene compound. Here, examples of the conjugated diene compound as a monomer include 1,3-butadiene, isoprene, 1,3-pentadiene, 2,3-dimethylbutadiene, 2-phenyl-1,3-butadiene, and 1,3-hexadiene. Of these, 1,3-butadiene is preferred. Meanwhile, examples of the aromatic vinyl compound as a monomer include styrene, p-methylstyrene, m-methylstyrene, p-tert-butylstyrene, α-methylstyrene, chloromethylstyrene, and vinyltoluene. In consequence, the low-molecular weight conjugated diene-based polymer is especially preferably polybutadiene. These monomers may be used alone or may be used in combination of two or more thereof.

A production method of the low-molecular weight conjugated diene-based polymer is not particularly limited, and the low-molecular weight conjugated diene-based polymer can be, for example, obtained by homopolymerizing the conjugated diene compound as a monomer or polymerizing a mixture of the aromatic vinyl compound and the conjugated diene compound as monomers in a hydrocarbon solvent that is inert against the polymerization reaction.

In the case of introducing at least one functional group into the molecule of the low-molecular weight conjugated diene-based polymer, the low-molecular weight conjugated diene-based polymer can be obtained through (1) a method in which the monomer or monomers are polymerized using a polymerization initiator, to form a polymer having a polymerization active site, and the polymerization active site is then modified with a modifying agent of every kind; (2) a method in which the monomer or monomers are polymerized using a polymerization initiator having a functional group, for example, a polymerization initiator having an Sn-Li, C-Li, or N-Li bond; or the like.

The polymerization initiator which is used for synthesis of the low-molecular weight conjugated diene-based polymer is preferably an alkali metal compound, more preferably a lithium compound, and much more preferably a hydrocarbyllithium or a lithium amide compound. In the case of using a lithium compound as the polymerization initiator, the aromatic vinyl compound and the conjugated diene compound are polymerized through anionic polymerization. In the case of using a hydrocarbyllithium as the polymerization initiator, a polymer having a hydrocarbyl group in a polymerization-initiation terminal, with the other terminal being a polymerization active site, is obtained. On the other hand, in the case of using a lithium amide compound as the polymerization initiator, a polymer having a nitrogen-containing functional group in a polymerization-initiation terminal, with the other terminal being a polymerization active site, is obtained, and the foregoing polymer can be used as the low-molecular weight conjugated diene-based polymer having at least one functional group without being modified with a modifying agent. The use amount of the polymerization initiator (in the case of using plural polymerization initiators, the total amount of all of the polymerization initiators) is preferably in a range of 0.2 to 20 mmol per 100 g of the monomer or monomers.

Examples of the hydrocarbyllithium include ethyllithium, n-propyllithium, isopropyllithium, n-butyllithium, sec-butyllithium, tert-octyllthium, n-decyllithium, phenyllithium, 2-naphthyllithium, 2-butyl-phenyllithium, 4-phenyl-butyllithium, cyclohexyllithium, cyclopentyllithium, and a reaction product between diisopropenylbenzene and butyllithium. Of these, alkyllithiums, such as ethyllithium, n-propyllithium, isopropyllithium, n-butyllithium, sec-butyllithium, tert-octyllthium, and n-decyllithium, are preferred, and n-butyllithium is especially preferred.

A method of producing the low-molecular weight conjugated diene-based polymer using a polymerization initiator is not particularly limited, and for example, the low-molecular weight diene-based polymer can be produced by polymerizing the monomer or monomers in a hydrocarbon solvent that is inert against the polymerization reaction.

Here, examples of the hydrocarbon solvent that is inert against the polymerization reaction include propane, n-butane, isobutane, n-pentane, isopentane, n-hexane, cyclohexane, propene, 1-butene, isobutene, trans-2-butene, cis-2-butene, 1-pentene, 2-pentene, 1-hexene, 2-hexene, benzene, toluene, xylene, and ethylbenzene. These may be used alone or may be used in admixture of two or more thereof.

The aforementioned polymerization reaction may be carried out in the presence of a randomizer.

The randomizer is able to control the microstructure of the conjugated diene compound moiety of the polymer, and more specifically, it has an action of controlling the vinyl bonding amount of the conjugated diene compound moiety of the polymer; randomizing the conjugated diene compound unit and the aromatic vinyl compound unit in the copolymer; or the like.

Examples of the randomizer include dimethoxybenzene, tetrahydrofuran, dimethoxyethane, diethylene glycol dibutyl ether, diethylene glycol dimethyl ether, bistetrahydrofurylpropane, triethylamine, pyridine, N-methylmorpholine, N,N,N',N'-tetramethylethylenediamine, 1,2-dipiperidinoethane, potassium t-amylate, potassium t-butoxide, and sodium t-amylate. The use amount of such a randomizer is preferably in a range of 0.1 to 100 equivalents by mol per mol of the polymerization initiator.

The anionic polymerization is preferably carried out through solution polymerization, and the concentration of the aforementioned monomer or monomers in the polymerization reaction solution is preferably in a range of 5 to 50% by mass, and more preferably in a range of 10 to 30% by mass. In the case of jointly using the conjugated diene compound and the aromatic vinyl compound, the content of the aromatic vinyl compound in the monomer mixture can be appropriately selected according to the amount of the aromatic vinyl compound in the targeted copolymer. In addition, the polymerization mode is not particularly limited, and it may be either a batch mode or a continuous mode.

The polymerization temperature of the anionic polymerization is preferably in a range of 0 to 150°C, and more preferably in a range of 20 to 130°C. Although the foregoing polymerization can be carried out under a generated pressure, typically, the polymerization is preferably performed under a pressure sufficient for keeping the used monomer or monomers substantially in the liquid phase. Here, in the case of carrying out the polymerization reaction under a pressure higher than the generated pressure, it is preferred to pressurize the reaction system with an inert gas. In addition, as the raw materials to be used for the polymerization, such as the monomer or monomers, the polymerization initiator, and the solvent, it is preferred to use those from which reaction inhibition substances, such as water, oxygen, carbon dioxide, and a protonic compound, have been removed in advance.

Furthermore, in modifying the polymerization active site of the (co)polymer having a polymerization active site with a modifying agent, the modifying agent to be used is preferably a nitrogen-containing compound, a silicon-containing compound, or a tin-containing compound. In this case, a nitrogen-containing functional group, a silicon-containing functional group, or a tin-containing functional group can be introduced through a modification reaction.

The modification reaction of the polymerization active site with the modifying agent is preferably performed through a solution reaction, and the monomer or monomers used during polymerization may be contained in the solution. In addition, the reaction mode of the modification reaction is not particularly limited, and it may be either a batch mode or a continuous mode. Furthermore, the reaction temperature of the modification reaction is not particularly limited so far as the reaction proceeds, and the reaction temperature of the polymerization reaction may be adopted as it is. The use amount of the modifying agent (in the case of using plural modifying agents, the total amount of all of the modifying agents) is preferably in a range of 0.25 to 3.0 mol, and more preferably in a range of 0.5 to 1.5 mol per mol of the polymerization initiator used for the production of the polymer.

In the rubber composition to be used for the run flat tire of the present invention, after the reaction solution containing the low-molecular weight conjugated diene-based polymer is dried to separate the low-molecular weight conjugated diene-based polymer, the resulting low-molecular weight conjugated diene-based polymer may be mixed with the rubber component; or after the reaction solution containing the low-molecular weight conjugated diene-based polymer is mixed in a solution state with a rubber cement of the rubber component, the resultant may be dried to obtain a mixture of the rubber component and the low-molecular weight conjugated diene-based polymer.

### [Sulfur]

It is preferred that the rubber composition for run flat tires of the present invention contains sulfur.

The content of sulfur in the rubber composition for run flat tires of the present invention is preferably 1.0 to 12 parts by mass, more preferably 1.0 to 11 parts by mass, still more preferably 3.0 to 11 parts by mass, yet still more preferably 5.0 to 11 parts by mass, and even yet still more preferably 5.5 to 9.0 parts by mass based on 100 parts by mass of the rubber component.

### [Vulcanization Accelerator]

In order to accelerate the vulcanization of the rubber component, the rubber composition for run flat tires of the present invention contains a vulcanization accelerator.

The vulcanization accelerator is contained in the rubber composition for run flat tires of the present invention such that a ratio (d/b) of the content (d) of the vulcanization accelerator to the content (b) of the low-molecular weight conjugated diene-based polymer is in a range of 1 to 3.5.

As mentioned previously, when the ratio (d/b) is less than 1, and the amount of the low-molecular weight conjugated diene-based polymer in the rubber composition for run flat tires is high, the side reinforcing rubber layer is softened, the deflection is increased, and the run flat durability cannot be obtained. When the ratio (b/d) is more than 3.5, the crosslinking point due to vulcanization is increased, and the heat resistance of the side reinforcing rubber layer obtained from the rubber composition for run flat tires is decreased, so that the run flat durability is not obtained. When the vulcanization of the rubber component is excessively advanced, the elasticity of the side reinforcing rubber layer is decreased, so that the ride comfort is impaired.

From the viewpoint of more improving run flat durability, the ratio (d/b) is preferably 1.5 or more, more preferably 2.0 or more, and still more preferably 2.5 or more.

From the viewpoint of more improving the ride comfort, the ratio (d/b) is preferably 3.4 or less, and more preferably 3.0 or less.

Examples of the vulcanization accelerator include a guanidine-based compound, an aldehyde-amine-based compound, an aldehyde-ammonia-based compound, a thiazole-based compound, a sulfenamide-based compound, a thiourea-based compound, a thiuram-based compound, a dithiocarbamate-based compound, and a xanthate-based compound.

### (Thiuram Compound)

For the purpose of enhancing the heat resistance of the side reinforcing rubber layer obtained from the rubber composition for run flat tires of the present invention, to improve the run flat durability, it is preferred to vulcanize the rubber component by an EV (efficient vulcanizing) mode or a semi-EV mode. From such a viewpoint, it is preferred that the vulcanization accelerator contains a thiuram compound.

The side chain carbon number of the thiuram compound is preferably 4 or more, more preferably 6 or more, and still more preferably 8 or more. In the case where the side chain carbon number is 4 or more, dispersion of the thiuram compound in the rubber composition is excellent, and a uniform crosslinking network is readily constituted.

Examples of the thiuram compound having the side chain carbon number of 4 or more include tetrakis(2-ethylhexyl)thiuram disulfide, tetrakis(n-dodecyl)thiuram disulfide, and tetrakis(benzyl)thiuram disulfide. Above all, tetrakis(2-ethylhexyl)thiuram disulfide is preferred.

From the viewpoint of improving the run flat durability and the ride comfort, the content of the vulcanization accelerator in the rubber composition for run flat tires of the present invention (in the case of containing plural vulcanization accelerators, the total amount of all of the vulcanization accelerators) is preferably 2 to 14 parts by mass, more preferably 4 to 10 parts by mass, and still more preferably 4 to 9 parts by mass based on 100 parts by mass of the rubber component.

In order to obtain desired vulcanization torque and vulcanization rate, a vulcanization retarder or the like may be used in combination.

### [Filler]

In order to impart rigidity to the rubber composition, the rubber composition for run flat tires of the present invention preferably contains a filler, and especially preferably contains a reinforcing filler.

Examples of the reinforcing filler include inorganic fillers, such as silica, clay, talc, calcium carbonate, and aluminum hydroxide, and carbon black. The kind of the filler is not particularly limited, and an arbitrary filler can be selected and used among those which have hitherto been customarily used as a filler for rubbers. However, it is preferred to contain either one or both of carbon black and silica.

In the case of using an inorganic filler, such as silica, a silane coupling agent may be used in combination.

### (Silica)

Silica is not particularly limited, and examples thereof include wet method silica (hydrated silicate), dry method silica (anhydrous silicate), calcium silicate, and aluminum silicate. Of these, wet method silica is preferred. These silicas may be used alone or may be used in combination of two or more thereof.

### (Carbon Black)

Carbon black is not particularly limited, and examples thereof include carbon blacks of GPF, FEF, HAF, ISAF, and SAF grades. These carbon blacks may be used alone or may be used in combination of two or more thereof.

From the viewpoint of improving the durability of the run flat tire, the content of the filler in the rubber composition for run flat tires of the present invention (in the case of containing plural fillers, the total amount of all of the fillers) is preferably 30 to 100 parts by mass, more preferably 35 to 80 parts by mass, and still more preferably 40 to 70 parts by mass based on 100 parts by mass of the rubber component.

In the rubber composition for run flat tires of the present invention, a compounding agent which is mixed in a typical rubber composition and used can be contained together with the aforementioned components. Examples thereof include various compounding agents which are generally mixed, such as a silane coupling agent, a vulcanization acceleration aid, a vulcanization retarder, a softener, e.g., various process oils, zinc oxide, stearic acid, a wax, an anti-aging agent, a compatibilizer, a workability improver, a lubricant, a tackifier, a petroleum-based resin, an ultraviolet absorber, a dispersant, and a homogenizing agent.

In obtaining the rubber composition for run flat tires, a mixing method of the aforementioned respective components is not particularly limited, and all of the component raw materials may be mixed and kneaded at once, or the respective components may be mixed and kneaded in separate two steps or three steps. In performing kneading, a kneading machine, such as a roll, an internal mixer, and a Banbury rotor, can be used. Furthermore, in molding in a sheet-like form, a stripe-like form, or the like, a known molding machine, such as an extrusion molding machine and a press machine, may be used.

### <Run Flat Tire>

The run flat tire of the present invention is provided with a sidewall section having a side reinforcing rubber layer formed from the rubber composition for run flat tires of the present invention, a tread, a carcass, a bead core, and a bead filler.

An example of a structure of the run flat tire of the present invention is hereunder described by reference to Fig. 1.

Fig. 1 is a schematic view illustrating a cross section of an embodiment of the run flat tire of the present invention and describes an arrangement of respective members constituting the run flat tire of the present invention, such as a side reinforcing rubber layer 8. The run flat tire is hereinafter occasionally referred to simply as "tire".

In Fig. 1, a suited embodiment of the run flat tire of the present invention is a tire provided with a carcass 2 which is ranged toroidally over a space between a pair of bead cores 1 and 1' (1' is not illustrated) and which is formed of at least one radial carcass ply rolling up the bead core 1 from an inside of the tire to an outside thereof at both end parts; a sidewall section 3 which is arranged at an outside of a tire axial direction in a side region of the carcass 2 to form an outside section; a tread 4 which is arranged at an outside of a tire diameter direction in a crown region of the carcass 2 to form a grounding section; a belt layer 5 which is arranged between the tread 4 and the crown region of the carcass 2 to form a reinforcing belt; an inner liner 6 which is arranged on the whole surface of the carcass 2 at an inside of the tire to form an air proof film; a bead filler 7 which is arranged between a main body portion of the carcass 2 extending from one bead core 1 to the other bead core 1' and a roll-up portion rolled up on the bead core 1; and at least one side reinforcing rubber layer 8 which is arranged between the carcass 2 and the inner liner 6 from the bead filler 7 side section to a shoulder zone 10 in a side region of the carcass and in which a cross-sectional shape along a rotational axis of the tire is approximately lunate.

By constructing this side reinforcing rubber layer 8 of the tire by using the rubber composition for run flat tires of the present invention, the run flat tire of the present invention is excellent in the run flat durability and the ride comfort.

Although the carcass 2 of the run flat tire of the present invention is formed of at least one carcass ply, the carcass ply may also be formed of two or more sheets thereof. In addition, the reinforcing cord of the carcass ply can be arranged at an angle of substantially 90° against the circumferential direction of the tire, and an embedded count of the reinforcing cord can be 35 to 65 pieces/50 mm. In addition, outside the crown region of the carcass 2 in the radial direction of the tire, the belt layer 5 formed of two layers of a first belt layer 5a and a second belt layer 5b is arranged; however, the number of layers in the belt layer 5 is not limited thereto. Plural steel cords arranged in parallel in the width direction of the tire without being twisted together can be embedded in the rubber for use as the first belt layer 5a and the second belt layer 5b. For example, by arranging the first belt layer 5a and the second belt layer 5b so as to cross each other between the layers, a crossed belt may be formed.

Furthermore, outside the belt layer 5 in the radial direction of the run flat tire of the present invention, a belt reinforcing layer (not illustrated in the drawing) may be further arranged. The reinforcing cord of the belt reinforcing layer is preferably made from a highly elastic organic fiber for the purpose of securing the tensile rigidity in the circumferential direction of the tire. Organic fiber cords made of an aromatic polyamide (aramid), polyethylene naphthalate (PEN), polyethylene terephthalate, rayon, ZYLON (a registered trademark) (poly-p-phenylenebenzobisoxazole (PBO) fiber), an aliphatic polyamide (nylon), or the like can be used as the organic fiber cord.

Furthermore, in the run flat tire of the present invention, besides the side reinforcing layer, a reinforcing member not illustrated in the drawing, such as an insert and a flipper, may be arranged. Here, the insert is a reinforcing material using plural highly elastic organic fiber cords placed side by side and coated with rubber, so as to be arranged from the bead section to the side section in the circumferential direction of the tire (not illustrated in the drawing). The flipper is a reinforcing material made of plural highly elastic organic fiber cords placed side by side and coated with rubber; arranged between the main body portion of the carcass ply extending between the bead core 1 and 1' and, a folding portion of the carcass ply folded around the bead core 1 or 1'; involving bead core 1 or 1', and at least a part of the bead filler 7 arranged outside thereof in the radial direction of the tire. The angle of the insert and the flipper is preferably 30 to 60° to the circumferential direction.

The tire of the present invention has a pair of bead sections in which the bead cores 1 and 1' are embedded, respectively. The carcass 2 is folded around the bead cores 1 and 1' from the inside to the outside of the tire so as to be engaged. A method for engaging the carcass 2 is not limited thereto. For example, at least one carcass ply of the carcass plies constituting the carcass 2 may be folded around the bead cores 1 and 1' from the inside toward the outside in the tire width direction, so as to form a so-called envelope structure in which the folded end is positioned between the belt layer 5 and the crown portion of the carcass 2. Furthermore, a tread pattern may be appropriately formed on the surface of the tread 4, and the inner liner 6 may be formed in the innermost layer. In the run flat tire of the present invention, a gas, such as normal air or air in which a partial oxygen pressure has been changed, or an inert gas, such as nitrogen, can be used as the gas to be filled in the tire.

### (Manufacturing of Run Flat Tire)

The run flat tire of the present invention is manufactured by a typical method for manufacturing a run flat tire by using the vulcanized rubber according to the present invention for the side reinforcing rubber layer 8.

That is, the rubber composition containing various chemicals is processed in respective members in an unvulcanization stage, and the members are stuck and molded on a tire molding machine by a conventional method, thereby molding a green tire. The green tire is heated and pressurized in a vulcanizing machine to obtain a run flat tire.

### Examples

### <Examples 1 to 11 and Comparative Examples 1 to 9>

### [Preparation of Rubber Composition for Run Flat Tires]

Respective components were kneaded in a mixing composition shown in the following Tables 1 to 3, thereby preparing rubber compositions for run flat tires.

Conjugated diene-based copolymers (B-1) to (B-5) used for the preparation of the rubber composition for run flat tires were produced by the following methods.

### 1. Production of Conjugated Diene-Based Copolymer (B-1)

In an 800-mL pressure-resistant glass vessel which had been dried and purged with nitrogen, 300 g of cyclohexane, 40 g of 1,3-butadiene, and 0.53 mmol of ditetrahydrofurylpropane were charged, and 1.32 mmol of n-butyllithium (n-BuLi) was further added, followed by performing a polymerization reaction at 50°C for 1.5 hours. On this occasion, a polymerization conversion rate was almost 100%. Thereafter, 0.5 mL of an isopropanol solution of 2,6-di-t-butyl-p-cresol (BHT) (BHT concentration: 5% by mass) was added to the polymerization reaction system, to terminate the polymerization reaction, and the resultant was further dried according a conventional method, thereby obtaining a conjugated diene-based copolymer (B-1).

The resulting conjugated diene-based copolymer (B-1) was measured for a microstructure (vinyl bonding amount and styrene bonding amount), a weight average molecular weight (Mw), and a molecular weight distribution (Mw/Mn). As a result, the vinyl bonding amount was 45% by mass, the styrene bonding amount was 0% by mass, Mw was 10,000, and Mw/Mn was 1.23.

The weight average molecular weight (Mw), the molecular weight distribution (Mw/Mn), and the microstructure (vinyl bonding amount and styrene bonding amount) of the produced conjugated diene-based copolymer (B-1) as well as conjugated diene-based copolymers (B-2) to (B-5) as mentioned later were measured by the following methods.

### (1) Microstructure

The microstructure of each of the conjugated diene-based copolymers was determined by an infrared method (Morello method).

### (2) Weight Average Molecular Weight (Mw) and Molecular Weight Distribution (Mw/Mn)

The weight average molecular weight (Mw) as expressed in terms of polystyrene and the molecular weight distribution (Mw/Mn) of each of the conjugated diene-based copolymers were determined on a basis of monodispersed polystyrene by the gel permeation chromatography having the following constitution.
GPC: HLC-8020, manufactured by Tosoh Corporation
Column: GMH-XL (two columns connected in series), manufactured by Tosoh Corporation
Detector: Differential refractive index meter (RI)

### 2. Production of Conjugated Diene-Based Copolymer (B-2)

A conjugated diene-based copolymer (B-2) was obtained in the same production method as in the conjugated diene-based copolymer (B-1), except for changing the use amount of n-butyllithium (n-BuLi) to 0.59 mmol.

The resulting conjugated diene-based copolymer (B-2) was measured for a microstructure (vinyl bonding amount and styrene bonding amount), a weight average molecular weight (Mw), and a molecular weight distribution (Mw/Mn). As a result, the vinyl bonding amount was 45% by mass, the styrene bonding amount was 0% by mass, Mw was 25,000, and Mw/Mn was 1.12.

### 3. Production of Conjugated Diene-Based Copolymer (B-3)

A conjugated diene-based copolymer (B-3) was obtained in the same production method as in the conjugated diene-based copolymer (B-1), except for changing the use amount of n-butyllithium (n-BuLi) to 0.35 mmol.

The resulting conjugated diene-based copolymer (B-3) was measured for a microstructure (vinyl bonding amount and styrene bonding amount), a weight average molecular weight (Mw), and a molecular weight distribution (Mw/Mn). As a result, the vinyl bonding amount was 45% by mass, the styrene bonding amount was 0% by mass, Mw was 40,000, and Mw/Mn was 1.08.

### 4. Production of Conjugated Diene-Based Copolymer (B-4)

A conjugated diene-based copolymer (B-4) was obtained in the same production method as in the conjugated diene-based copolymer (B-1), except for changing the use amount of n-butyllithium (n-BuLi) to 1.46 mmol.

The resulting conjugated diene-based copolymer (B-4) was measured for a microstructure (vinyl bonding amount and styrene bonding amount), a weight average molecular weight (Mw), and a molecular weight distribution (Mw/Mn). As a result, the vinyl bonding amount was 42% by mass, the styrene bonding amount was 0% by mass, Mw was 9,000, and Mw/Mn was 1.26.

### 5. Production of Conjugated Diene-Based Copolymer (B-5)

A conjugated diene-based copolymer (B-5) was obtained in the same production method as in the conjugated diene-based copolymer (B-1), except for changing the use amount of n-butyllithium (n-BuLi) to 1.25 mmol.

The resulting conjugated diene-based copolymer (B-5) was measured for a microstructure (vinyl bonding amount and styrene bonding amount), a weight average molecular weight (Mw), and a molecular weight distribution (Mw/Mn). As a result, the vinyl bonding amount was 40% by mass, the styrene bonding amount was 0% by mass, Mw was 43,000, and Mw/Mn was 1.06.

### [Production of Run Flat Tire, and Measurement of Physical Properties and Evaluation of Vulcanized Rubber]

Subsequently, the resulting rubber compositions are each arranged in the side reinforcing rubber layer 8 as illustrated in Fig. 1, and passenger car radial run flat tires having a tire size of 205/65 R16 are produced, respectively according to a conventional method. The maximum thickness of the side reinforcing rubber layer of the tire is set to 6.0 mm.

The produced prototype tires of the Examples and Comparative Examples are each evaluated for run flat durability and ride comfort. The results are shown in Tables 2 and 3.

### 1. Run Flat Durability

Each of the prototype tires is rim-assembled, charges to an inner pressure of 230 kPa, and then allows to stand at a room temperature of 38°C for 24 hours. Thereafter, a valve core is removed to return the inner pressure to an atmospheric pressure, and a drum-running test is performed under a condition under a load of 5.19 kN (530 kg) and at a velocity of 89 km/h and a room temperature of 38°C. On this occasion, a running distance until generation of a fault is measured and expresses in terms of an index while defining the running distance until generation of a fault of the prototype tire of Comparative Example 1 as 100. It is indicated that the larger the index value, the longer the running distance until generation of a fault, and the more excellent the run flat durability.

### 2. Ride Comfort

The respective prototype tires are mounted in a passenger car, and a feeling test regarding the ride comfort is performed by two expert drivers and evaluates in terms of a grade of 1 to 10. An average value thereof is then determined. The ride comfort is expressed in terms of an index while defining the average value of grade of the prototype tire of Comparative Example 1 as 100. It is indicated that the larger the index value, the more excellent the ride comfort.

**Table 1**

| Mixing composition of rubber composition | |
|---|---|
| Rubber component (A) | Kind and amount (parts by mass) shown in Tables 2 to 3 |
| Polymer (B) | Kind and amount (parts by mass) shown in Tables 2 to 3 |
| Sulfur (C) | Kind and amount (parts by mass) shown in Tables 2 to 3 |
| Vulcanization accelerator (D) | Kind and amount (parts by mass) shown in Tables 2 to 3 |
| Carbon black | 60 parts by mass |
| Stearic acid | 1.5 parts by mass |
| Zinc oxide | 1.5 parts by mass |
| Anti-aging agent | 1 part by mass |

Details of carbon black, stearic acid, zinc oxide, and anti-aging agent in Table 1 are as follows.
Carbon black: N220, manufactured by Asahi Carbon Co., Ltd., a trade name: "#80"
Stearic acid: manufactured by New Japan Chemical Co., Ltd., a trade name: "Stearic Acid 50S"
Zinc oxide: manufactured by HAKUSUI TECK Co., Ltd., a trade name: "No. 3 Zinc oxide"
Anti-aging agent: N-phenyl-N'-(1,3-dimethylbutyl)-p-phenylenediamine, manufactured by Ouchi Shinko Industrial Co., Ltd., a trade name: "NOCRAC 6C"

Details of the respective components as shown in the rubber component (A) section, the sulfur (C) section, and the vulcanization accelerator (D) section in Tables 2 to 3 are as follows. The conjugated diene copolymers (B-1) to (B-5) in the polymer (B) section are the conjugated diene-based copolymers (B-1) to (B-5) produced by the previously mentioned method.
Natural rubber (NR): RSS#1
Polybutadiene rubber: manufactured by JSR Corporation, a trade name: "BR01"
Thiuram-based vulcanization accelerator (TOT): tetrakis(2-ethylhexyl)thiuram disulfide, manufactured by Ouchi Shinko Industrial Co., Ltd., a trade name: "NOCCELER TOT-N"
Sulfenamide-based vulcanization accelerator (NS): N-t-butylbenzothiazolyl-2-sulfenamide, manufactured by Ouchi Shinko Industrial Co., Ltd., a trade name: "NOCCELER NS"

**Table 2**

| | | | Comparative Example 1 | Comparative Example 2 | Comparative Example 3 | Comparative Example 4 | Comparative Example 5 |
|---|---|---|---|---|---|---|---|
| Rubber component (A) | Natural rubber | Parts | 70 | 70 | 70 | 70 | 70 |
| | Polybutadiene rubber | Parts | 30 | 30 | 30 | 30 | 30 |
| Polymer (B) | Conjugated diene copolymer (B-1) | Parts | - | - | - | 4 | - |
| | Conjugated diene copolymer (B-2) | Parts | - | - | - | - | 4 |
| | Conjugated diene copolymer (B-4) | Parts | - | 4 | - | - | - |
| | Conjugated diene copolymer (B-5) | Parts | - | - | 4 | - | - |
| | Polymer: mixing amount (b) | Parts | 0 | 4 | 4 | 4 | 4 |
| Vulcanization accelerator (D) | Vulcanization accelerator: total mixing amount (d) | Parts | 3.5 | 3.5 | 3.5 | 3.5 | 3.5 |
| | Thiuram-based vulcanization accelerator (TOT) | Parts | 1.19 | 1.19 | 1.19 | 1.19 | 1.19 |
| | Sulfenamide-based vulcanization accelerator (NS) | Parts | 2.31 | 2.31 | 2.31 | 2.31 | 2.31 |
| Sulfur (C) | Sulfur: mixing amount | Parts | 4 | 4 | 4 | 4 | 4 |
| Vulcanization | accelerator/polymer mixing ratio (d/b) | - | 0.00 | 0.88 | 0.88 | 0.88 | 0.88 |
| Evaluation | Run flat durability | - | 100 | 75 | 101 | 98 | 99 |
| | Ride comfort | - | 100 | 103 | 99 | 103 | 102 |

| | | | Comparative Example 6 | Comparative Example 7 | Comparative Example 8 | Comparative Example 9 | Example 1 |
|---|---|---|---|---|---|---|---|
| Rubber component (A) | Natural rubber | Parts | 70 | 70 | 70 | 70 | 70 |
| | Polybutadiene rubber | Parts | 30 | 30 | 30 | 30 | 30 |
| Polymer (B) | Conjugated diene copolymer (B-1) | Parts | - | 3 | 0.8 | 11 | 4 |
| | Conjugated diene copolymer (B-3) | Parts | 4 | - | - | - | - |
| | Polymer: mixinq amount (b) | Parts | 4 | 3 | 0.8 | 11 | 4 |
| Vulcanization accelerator (D) | Vulcanization accelerator: total mixing amount (d) | Parts | 3.5 | 11 | 2.5 | 11 | 4 |
| | Thiuram-based vulcanization accelerator (TOT) | Parts | 1.19 | 3.74 | 0.85 | 3.74 | 1.36 |
| | Sulfenamide-based vulcanization accelerator (NS) | Parts | 2.31 | 7.26 | 1.65 | 7.26 | 2.64 |
| Sulfur (C) | Sulfur: mixing amount | Parts | 4 | 4 | 4 | 4 | 4 |
| Vulcanization accelerator/polymer mixing ratio (d/b) | | - | 0.88 | 3.67 | 3.13 | 1.00 | 1.00 |
| Evaluation | Run flat durability | - | 98 | 106 | 101 | 31 | 111 |
| | Ride comfort | - | 103 | 84 | 99 | 110 | 108 |

**Table 3**

| | | | Example 2 | Example 3 | Example 4 | Example 5 | Example 6 |
|---|---|---|---|---|---|---|---|
| Rubber component (A) | Natural rubber | Parts | 70 | 70 | 70 | 70 | 70 |
| | Polybutadiene rubber | Parts | 30 | 30 | 30 | 30 | 30 |
| Polymer (B) | Conjugated diene copolymer (B-1) | Parts | 4 | 3 | 3 | - | - |
| | Conjugated diene copolymer (B-2) | Parts | | | | 4 | |
| | Conjugated diene copolymer (B-3) | Parts | - | - | - | - | 4 |
| | Polymer: mixinq amount (b) | Parts | 4 | 3 | 3 | 4 | 4 |
| Vulcanization accelerator (D) | Vulcanization accelerator: total mixing amount (d) | Parts | 8 | 9 | 10 | 4 | 4 |
| | Thiuram-based vulcanization accelerator (TOT) | Parts | 2.72 | 3.06 | 3.4 | 1.36 | 1.36 |
| | Sulfenamide-based vulcanization accelerator (NS) | Parts | 5.28 | 5.94 | 6.6 | 2.64 | 2.64 |
| Sulfur (C) | Sulfur: mixing amount | Parts | 4 | 4 | 4 | 4 | 4 |
| Vulcanization | accelerator/polymer mixing ratio (d/b) | - | 2.00 | 3.00 | 3.33 | 1.00 | 1.00 |
| Evaluation | Run flat durability | - | 134 | 153 | 195 | 136 | 164 |
| | Ride comfort | - | 107 | 101 | 103 | 102 | 105 |

| | | | Example 7 | Example 8 | Example 9 | Example 10 | Example 11 |
|---|---|---|---|---|---|---|---|
| Rubber component (A) | Natural rubber | Parts | 70 | 70 | 70 | 90 | 50 |
| | Polybutadiene rubber | Parts | 30 | 30 | 30 | 10 | 50 |
| Polymer (B) | Conjugated diene copolymer (B-1) | Parts | 4 | 4 | 4 | 4 | 4 |
| | Polymer: mixinq amount (b) | Parts | 4 | 4 | 4 | 4 | 4 |
| Vulcanization accelerator (D) | Vulcanization accelerator: total mixing amount (d) | Parts | 4 | 4 | 4 | 4 | 4 |
| | Thiuram-based vulcanization accelerator (TOT) | Parts | 1.36 | 1.36 | 1.36 | 1.36 | 1.36 |
| | Sulfenamide-based vulcanization accelerator (NS) | Parts | 2.64 | 2.64 | 2.64 | 2.64 | 2.64 |
| Sulfur (C) | Sulfur: mixing amount | Parts | 0.8 | 7 | 11 | 4 | 4 |
| Vulcanization accelerator/polymer mixing ratio (d/b) | | - | 1.00 | 1.00 | 1.00 | 1.00 | 1.00 |
| Evaluation | Run flat durability | - | 108 | 213 | 190 | 150 | 220 |
| | Ride comfort | - | 150 | 108 | 115 | 121 | 110 |

It is noted from Tables 2 and 3 that the run flat tires of the Examples each produced using the rubber composition containing the low-molecular weight conjugated diene-based polymer [conjugated diene-based polymers (B-1) to (B-3)] in a small amount of 1 to 10 parts by mass based on 100 parts by mass of the rubber component, with a ratio to the vulcanization accelerator (d/b) being 1 to 3.5, are improved in the run flat durability without impairing the ride comfort, as compared by the run flat tires of the Comparative Examples.

### INDUSTRIAL APPLICABILITY

The rubber composition for run flat tires of the present invention is excellent in the durability and the elasticity, and therefore, it is suitably used for a side reinforcing rubber of a run flat tire. In the case where the side reinforcing rubber layer produced using the rubber composition for run flat tires of the present invention is provided in the sidewall section, a run flat tire with excellent run flat durability and ride comfort is obtained.

### Reference Signs List

- 1:: Bead core
- 2:: Carcass
- 3:: Sidewall section
- 4:: Tread
- 5:: Belt layer
- 6:: Inner liner
- 7:: Bead filler
- 8:: Side reinforcing layer
- 10:: Shoulder zone

## Claims

1. A rubber composition for run flat tires, comprising:
a rubber component;
a low-molecular weight conjugated diene-based polymer having a weight average molecular weight of 10,000 to 40,000 as expressed in terms of polystyrene, which is measured by gel permeation chromatography, in an amount of 1 to 10 parts by mass based on 100 parts by mass of the rubber component; and
a vulcanization accelerator,
with a mass ratio of the content of the vulcanization accelerator to the content of the low-molecular weight conjugated diene-based polymer (vulcanization accelerator/low-molecular weight conjugated diene-based polymer) being 1 to 3.5.

2. The rubber composition for run flat tires according to claim 1, wherein the aromatic vinyl bonding amount of the low-molecular weight conjugated diene-based polymer is less than 5% by mass.

3. The rubber composition for run flat tires according to claim 1 or 2, further comprising sulfur in an amount of 1.0 to 12 parts by mass based on 100 parts by mass of the rubber component.

4. The rubber composition for run flat tires according to any one of claims 1 to 3, wherein the rubber component contains a natural rubber.

5. The rubber composition for run flat tires according to any one of claims 1 to 4, wherein the vulcanization accelerator contains a thiuram compound.

6. A run flat tire comprising:
a sidewall section having a side reinforcing rubber layer formed from the rubber composition for run flat tires according to any one of claims 1 to 5,
a tread,
a carcass,
a bead core, and
a bead filler.

## Patentansprüche

1. Kautschukzusammensetzung für Notlaufreifen, die Folgendes umfasst:
eine Kautschukkomponente,
ein konjugiertes dien-basiertes Polymer mit niedrigem Molekulargewicht, das ein gewichtsmittleres Molekulargewicht von 10 000 bis 40 000, ausgedrückt als Polystyrol, das durch Gelpermeationschromatographie gemessen wird, aufweist, in einer Menge von 1 bis 10 Massenanteile auf 100 Massenanteile der Kautschukkomponente, und
einen Vulkanisationsbeschleuniger,
mit einem Massenverhältnis des Gehalts des Vulkanisationsbeschleunigers zu dem Gehalt des konjugierten dien-basierten Polymers mit niedrigem Molekulargewicht (Vulkanisationsbeschleuniger/konjugiertes dien-basiertes Polymer mit niedrigem Molekulargewicht) das 1 bis 3,5 beträgt.

2. Kautschukzusammensetzung für Notlaufreifen nach Anspruch 1, wobei die Menge aromatischer Vinylbindung des konjugierten dien-basierten Polymers mit niedrigem Molekulargewicht weniger als 5 Massen-% beträgt.

3. Kautschukzusammensetzung für Notlaufreifen nach Anspruch 1 oder 2, die ferner Schwefel in einer Menge von 1,0 bis 12 Massenanteilen auf Grundlage von 100 Massenanteilen der Kautschukkomponente umfasst.

4. Kautschukzusammensetzung für Notlaufreifen nach einem der Ansprüche 1 bis 3, wobei die Kautschukkomponente einen Naturkautschuk enthält.

5. Kautschukzusammensetzung für Notlaufreifen nach einem der Ansprüche 1 bis 4, wobei der Vulkanisationsbeschleuniger eine Thiuramverbindung enthält.

6. Notlaufreifen, der Folgendes umfasst:
eine Seitenwandsektion, die eine Seitenverstärkungsgummischicht aufweist, die aus der Kautschukzusammensetzung für Notlaufreifen nach einem der Ansprüche 1 bis 5 geformt ist,
eine Lauffläche,
eine Karkasse,
einen Wulstkern und
einen Kernreiter.

## Revendications

1. Composition de caoutchouc pour des bandages pneumatiques à roulage à plat, comprenant :
un composant de caoutchouc ;
un polymère à base de diène conjugué à bas poids moléculaire ayant une masse moléculaire moyenne en poids comprise entre 10 000 et 40 000, exprimée en termes de polystyrène, qui est mesurée par chromatographe par perméation sur gel, dans une quantité de 1 à 10 parties en poids sur la base de 100 parties en poids du composant de caoutchouc ; et
un accélérateur de vulcanisation ;
avec un rapport en poids entre la teneur en accélérateur de vulcanisation et la teneur en polymère à base de diène conjugué à bas poids moléculaire (accélérateur de vulcanisation/polymère à base de diène conjugué à bas poids moléculaire) compris entre 1 et 3,5.

2. Composition de caoutchouc pour des bandages pneumatiques à roulage à plat selon la revendication 1, dans laquelle la quantité de liaison de vinyle aromatique du polymère à base de diène à bas poids moléculaire est inférieure à 5% en poids.

3. Composition de caoutchouc pour des bandages pneumatiques à roulage à plat selon la revendication 1 ou 2, comprenant en outre du soufre dans une quantité de 1,0 à 12 parties en poids sur la base de 100 parties en poids du composant de caoutchouc.

4. Composition de caoutchouc pour des bandages pneumatiques à roulage à plat selon l'une quelconque des revendications 1 à 3, dans laquelle le composant de caoutchouc contient un caoutchouc naturel.

5. Composition de caoutchouc pour des bandages pneumatiques à roulage à plat selon l'une quelconque des revendications 1 à 4, dans laquelle l'accélérateur de vulcanisation contient un composé de thiourame.

6. Bandage pneumatique à roulage à plat, comprenant :
une section de flanc comportant une couche de caoutchouc de renforcement latérale formée à partir de la composition de caoutchouc pour bandages pneumatiques à roulage à plat selon l'une quelconque des revendications 1 à 5 ;
une bande de roulement ;
une carcasse ;
une tringle ; et
un bourrage sur tringle.
